# EUROPEAN PATENT SPECIFICATION

(11) **EP 0 973 233 B1**
(45) Date of publication and mention of the grant of the patent: **27.11.2002**
(21) Application number: 99304982.4
(22) Date of filing: 24.06.1999
(51) Int. Cl.: H01R 4/64, H02K 5/22, F04C 23/00

(54) **Terminal box assembly of a sealed-type compressor**
Zusammenbau eines Anschlussgehäuses eines Verdichters vom abgedichteten Typ
Assemblage d'un boîtier à bornes d'un compresseur du type étanchéifié

(30) Priority: 17.07.1998 JP 20407498
(43) Date of publication of application: 19.01.2000
(73) Proprietor: Mitsubishi Heavy Industries, Ltd., Tokyo 100-0005 (JP)
(72) Inventor: Hirooka, Katsumi, Mitsubishi Heavy Industries, Ltd, Nishi-Kasugai-gun, Aichi-ken (JP)
(74) Representative: Sanderson, Michael John

(56) References cited:
- EP-A- 0 450 153
- EP-A- 0 562 909
- US-A- 5 173 057
- US-A- 5 664 959
- PATENT ABSTRACTS OF JAPAN vol. 095, no. 007, 31 August 1995 (1995-08-31) & JP 07 103161 A (MITSUBISHI HEAVY INDUSTRIES), 18 April 1995 (1995-04-18)

## Description

The present invention relates to a sealed-type compressor, and more particularly, relates to a structure of a terminal box for covering terminals which connect wiring from the electric power supply and a lead wire of a motor for the compressor.

Conventionally, a sealed-type compressor has been known which comprises a scroll-type compressor mechanism and a motor contained in a sealing housing, and both compressor mechanism and the motor are connected by a rotating shaft.

In the sealing housing, a terminal for connecting the lead wire of the motor and the wiring from a power supply and a terminal box which protects the terminal are fixed.

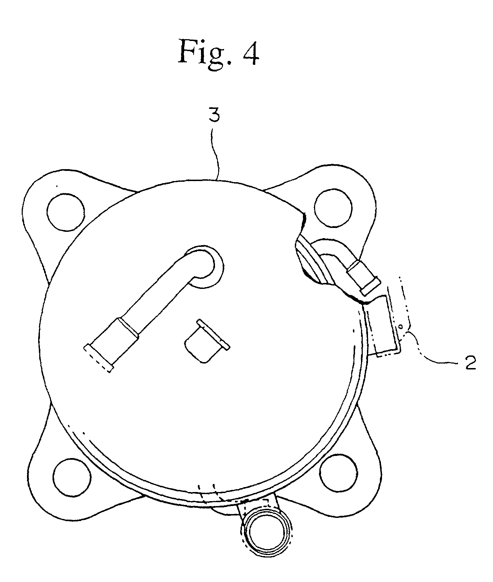

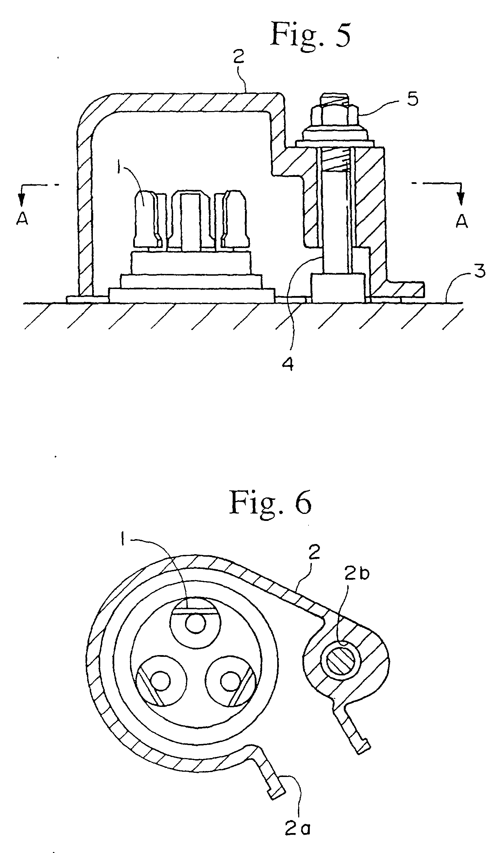

Fig. 4 is a plan view showing a conventional sealed-type compressor, Fig. 5 is a cross-sectional view of the terminal and the terminal box, and Fig. 6 is a diagram showing a cross-sectional view along line A-A of Fig. 5. In these figures, reference numeral 1 denotes a terminal, 2 denotes a plastic cover (a terminal box), and 3 denotes a sealing housing.

When connecting the power supply with the terminal 1 by wiring, a wire is first connected to the terminal 1 while the plastic cover 2 is removed from the sealing housing 3, then passing the wire through an opening 2a of the plastic cover 2, and allowing a bolt 4 welded to the sealing housing 3 pass through the hole 2b of the plastic cover 2. Finally the wire is fixed by tightening the bolt with a nut 5 while the plastic cover 2 abuts the sealing housing 3.

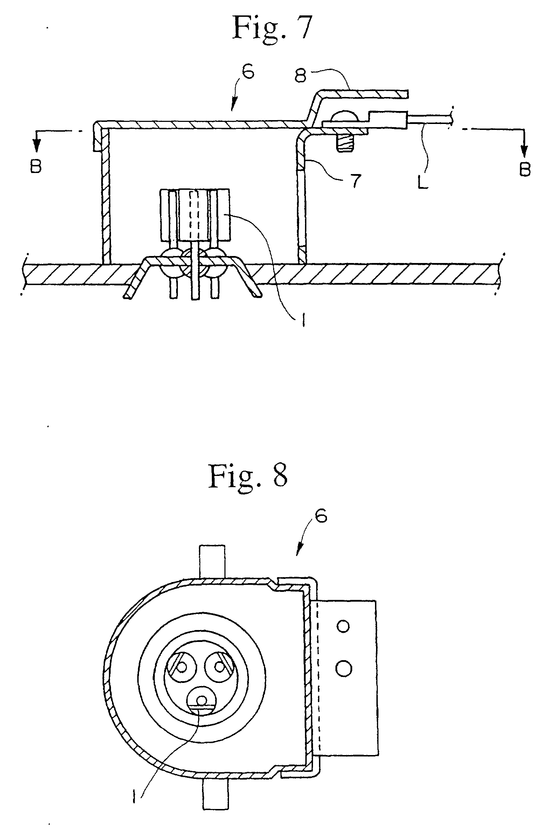

However, when the terminal box (plastic cover 2) is mounted as described above, it is not possible to connect a ground wire. Thus, when it is necessary to provide a ground wire, the terminal box must be replaced with a structurally modified terminal box 6 shown in Figs. 7 and 8. Furthermore, since the terminal box 6 is constructed by a cover 7 made of an iron plate on which the ground wire L is fixed by a set screw and by a plastic cover 8 for covering the cover 7, the terminal box becomes inevitably expensive.

US-A-5664959, which is considered to represent the closest prior art discloses an electric connector plug for making electrical connection to the terminal assembly of a hermetic compressor. A flexible skirt extends axially downward to fit snugly over the shoulder of the body of a terminal assembly when connected. An ear extends from the side wall of the plug and has an engaging slot which is sized and configured so that the engaging slot engages a stud that extends from the compressor shell in the vicinity of the terminal assembly when the plug is correctly installed on the terminal assembly.

The present invention is to solve the problems associated with the prior art and in particular to provide an inexpensive terminal box which can be used in common irrespective of whether or not a ground wire is necessary.

According to the present invention there is provided a terminal box assembly of a sealed-type compressor, comprising a sealing housing in which a terminal for connecting a lead wire from a motor and a wiring from a power supply and a terminal box for covering the terminal are secured, which stores a liquid compressing mechanism and the motor configured to drive the compressing mechanism, the terminal box assembly of the sealed type compressor comprises a securing means for securing both of the terminal box and, in use, a ground terminal in the sealing housing, the securing means including a bolt mounted in the sealing housing, wherein the terminal box has an opening configured to allow a ground wire to pass through in order to be connected to the ground terminal, and wherein the securing means is configured such that the ground terminal is secured in the terminal box to the sealing housing.

The securing means may comprise the bolt having a portion with a screw thread, a first nut engaged with the screw thread of the bolt, the first nut and the bolt being configured to secure the terminal box to the sealing housing, and a second nut engaged with the screw thread of the bolt, the second nut being positioned within the terminal box and being configured to secure, in use, the ground terminal in the terminal box to the sealing housing.

In the drawings:
Fig. 1 is an enlarged view of a main portion (terminal box) of a sealed-type compressor according the an embodiment of the present invention.
Fig. 2 is a diagram showing a cross-sectional view along the line C-C of Fig. 1.
Fig. 3 shows a longitudinal cross sectional view of the sealed-type compressor as a whole.
Fig. 4 shows a partially exploded plan view of an example of a conventional sealed-type compressor.
Fig. 5 shows a cross-sectional view of the terminal box shown in Fig. 4.
Fig. 6 is a diagram showing a cross-sectional view along the line A-A of Fig. 5.
Fig. 7 shows a cross-sectional view of an example of a conventional sealed-type compressor when it is necessary to apply a ground wire.
Fig. 8 is a diagram showing a cross-sectional view along the line B-B of Fig. 7.

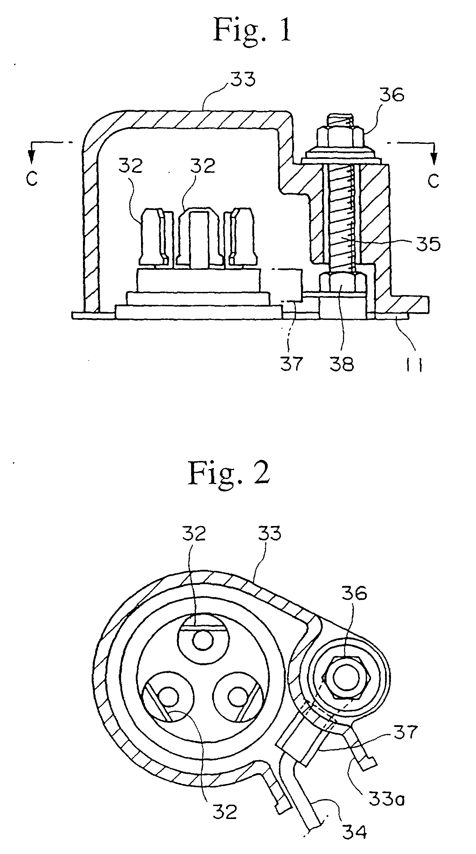

Hereinafter, a preferred embodiment of the present invention will be described with reference to Figs. 1 to 3.

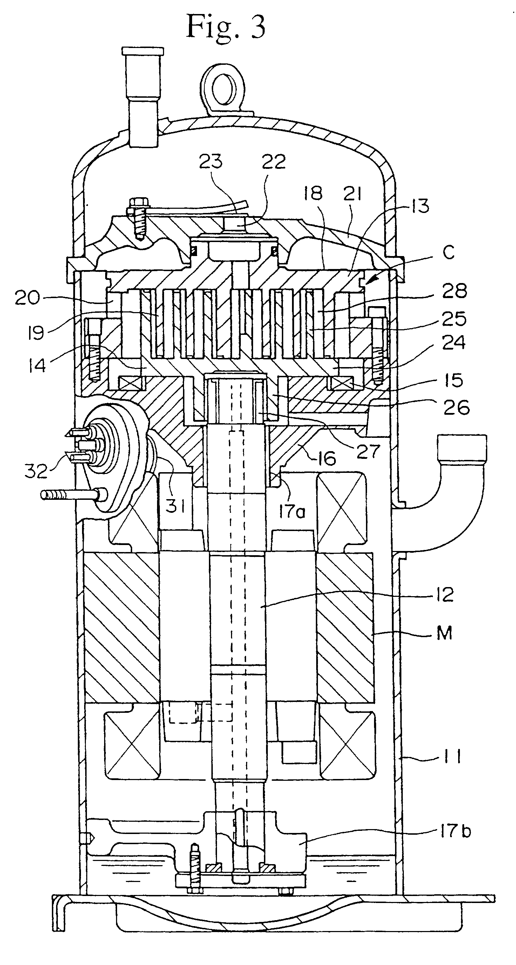

As shown in Fig. 3, a sealing housing 11 containing a scroll-type compressor mechanism C in its upper part, and a motor M in its lower part, where the compressor mechanism C and the motor M are connected through a rotating shaft 12.

The scroll-type compressor mechanism C comprises a stationary scroll member 13, an orbiting scroll member 14, an Oldham's ring 15 for obstructing autorotation of the orbiting scroll member, a frame 16 to which the stationary scroll member 13 is fixed, and an upper bearing 17a for supporting the rotating shaft 12.

The stationary scroll member 13 is composed of end plates 18 and an involute-shaped wrap 19 which are vertically mounted inside of the end plates 18, and an intake hole 20 is formed in the peripheral wall and an exhaust port 22 is provided at the centres of the end plate 18 and the discharge cover 21. A discharge valve 23 for opening or closing the exhaust port 22 is also provided at the exhaust port 22.

The orbiting scroll member 14 is provided with end plates 24 and an involute-shaped wrap 25 which is vertically arranged inside the end plates 24.

An eccentric bush 27 is rotatably fitted in a boss 26, vertically provided at the rear surface of the end plates 24, and an eccentric pin, which protrudes from the top end of the rotating shaft 12, is rotatably inserted into a hole formed in the eccentric bush 27.

The scroll-type compressor mechanism is constructed such that a plurality of sealed spaces 28 are formed by positioning the stationary scroll member 13 and the orbiting scroll member 14 into an eccentric engagement separated at a designated distance and by shifting either the stationary scroll member or the orbiting scroll member in an orbiting direction of the orbiting scroll member by 180 degrees.

The stationary scroll member 13 and the orbiting scroll member 14 are mounted on the upper surface of the frame 16 fixed to the sealing housing 11, and the rotating shaft 12 is rotatably supported by the upper bearing 17a and the lower bearing 17b.

The lead wire 31 of the motor M is connected to the inside of the terminal 32 fixed to the sealing housing 11 and the outside of the terminal 32 is protected by the plastic cover 33 (the terminal box).

The terminal 32 and the plastic cover 33 are constructed by the same structure as the conventional structure and an opening 33a is formed in the plastic cover 33 for admitting the wiring from the power supply and the ground wire 34.

A screw thread is formed from the base to the top of the bolt 35 welded to the sealing housing 11 such that the nut 36 for securing the plastic cover 33 to the sealing housing 11 and the nut 38 for connecting the ground terminal 37 to the bolt 35 are engaged to the screw thread of the bolt 35.

The bolt 35 and the nuts 36 and 38 constitute the securing means of an embodiment of the present invention.

In the sealed-type compressor provided with the above structure, when it is necessary to connect the ground wire, connection is simply achieved by passing the ground terminal through the bolt and by securing it by the nut 38.

Furthermore, the wiring from the power supply is connected with the terminal 32 and, while the wiring and the ground wire 34 pass through the opening 33a, the plastic cover 33 is abutted to the sealing housing 11 by setting the plastic cover 33 to pass over the bolt 35.

Subsequently, the plastic cover 33 is secured to the sealing housing 11 by screwing the nut 36 into the bolt 35.

In contrast, when the ground is not necessary, it is possible to carry out the wiring by the use of the same plastic cover as that when the ground is required by omitting the ground terminal 37 and the nut 38.

As hereinabove described, in the sealed-type compressor according to an embodiment of the present invention, it is possible to use the same terminal box (plastic cover 33) as the conventional terminal box in any cases irrespective of whether or not the ground is necessary. The conventional terminal box (plastic cover 33) has been used when the ground is not necessary. However, in the present invention, since almost the same terminal box as the conventional one can be used in any cases irrespective of whether or not the ground is necessary, the sealed-type compressor of the present invention does not need to provide another type of the terminal box and reduced cost is realised.

As clearly indicated by the above explanations, according to the present invention, the ground terminal is not directly secured to the terminal box of the sealing housing, but rather the ground terminal is designed such that it can be assembled with a securing means for securing the terminal box to the sealing housing. Thereby, the same terminal box can be used irrespective of whether or not the ground is necessary, the sealed-type compressor of the present invention does not need to provide another type of the terminal box, and reduced cost is realised.

## Claims

1. A terminal box assembly of a sealed-type compressor, comprising a sealing housing (11), in which a terminal (32) for connecting a lead wire (31) from a motor (M) and a wiring from a power supply and a terminal box (33) for covering the terminal (32) are secured, and which stores a liquid compressing mechanism (C) and the motor (M) configured to drive the compressing mechanism, **characterised in that** the terminal box assembly of the sealed type compressor comprises a securing means for securing both of the terminal box (33) and, in use, a ground terminal (37) in the sealing housing (11), the securing means including a bolt (35) mounted in the sealing housing (11), wherein the terminal box (33) has an opening (33a) configured to allow a ground wire (34) to pass through in order to be connected to the ground terminal (37), and wherein the securing means is configured such that the ground terminal (37) is secured in the terminal box (33) to the sealing housing (11).

2. A terminal box assembly of a sealed-type compressor according to claim 1, wherein the securing means comprises the bolt (35) having a portion with a screw thread, a first nut (36) engaged with the screw thread of the bolt (35), the first nut (36) and the bolt (35) being configured to secure the terminal box (33) to the sealing housing (11), and a second nut (38) engaged with the screw thread (40) of the bolt (35), the second nut (38) being positioned within the terminal box (33) and being configured to secure, in use, the ground terminal (37) in the terminal box (33) to the sealing housing (11).

3. A sealed-type compressor comprising a sealed housing (11) containing a liquid compressing mechanism (C), a motor (M) for driving said mechanism (C) and a terminal box assembly mounted externally of the housing (11), a lead wire (31) from the motor (M) being connected to the terminal box assembly from within the housing (11), and a power supply being connected to the terminal box assembly from externally of the housing (11), the terminal box assembly being as claimed in claim 1 or claim 2.

## Patentansprüche

1. Anschlusskastenanordnung eines abgedichteten Kompressors, umfassend ein Dichtungsgehäuse (11), in dem ein Anschluss (32) zum Anschließen eines Leitungsdrahts (31) von einem Motor (M) und eine Verkabelung von einer Stromversorgung sowie ein Anschlusskasten (33) zum Bedecken des Anschlusses (32) befestigt sind, und in dem ein Flüssigkeitskompressionsmechanismus (C) und der Motor (M) untergebracht sind, der so konfiguriert ist, dass er den Kompressionsmechanismus antreibt, **dadurch gekennzeichnet, dass** die Anschlusskastenanordnung des abgedichteten Kompressors ein Befestigungsmittel umfasst, um sowohl den Anschlusskasten (33) als auch, bei Verwendung, eine Erdklemme (37) im Dichtungsgehäuse (11) zu befestigen, wobei das Befestigungsmittel einen Bolzen (35) umfasst, der im Dichtungsgehäuse (11) montiert ist, wobei der Anschlusskasten (33) eine Öffnung (33a) aufweist, die so konfiguriert ist, dass ein Erdungsdraht (34) durch sie hindurchgehen kann, um ihn an die Erdklemme (37) anzuschließen, und wobei das Befestigungsmittel so konfiguriert ist, dass die Erdklemme (37) im Anschlusskasten (33) am Dichtungsgehäuse (11) befestigt ist.

2. Anschlusskastenanordnung eines abgedichteten Kompressors nach Anspruch 1, worin das Befestigungsmittel einen Bolzen (35), der einen Abschnitt mit einem Schraubengewinde aufweist, eine erste Mutter (36), die sich mit dem Schraubengewinde des Bolzens (35) in Eingriff befindet, wobei die erste Mutter (36) und der Bolzen (35) so konfiguriert sind, dass der Anschlusskasten (33) am Dichtungsgehäuse (11) befestigt ist, sowie eine zweite Mutter (38) umfasst, die sich mit dem Schraubengewinde (40) des Bolzens (35) in Eingriff befindet, wobei die zweite Mutter (38) innerhalb des Anschlusskastens (33) angeordnet ist und eine solche Konfiguration aufweist, dass die Erdklemme (37) bei Verwendung im Anschlusskasten (33) am Dichtungsgehäuse (11) befestigt ist.

3. Abgedichteter Kompressor, umfassend ein abgedichtetes Gehäuse (11), das einen Flüssigkeitskompressionsmechanismus (C), einen Motor (M) zum Antreiben des Mechanismus (C) sowie eine Anschlusskastenanordnung enthält, die außerhalb des Gehäuses (11) montiert ist, einen Leitungsdraht (31) vom Motor (M), der von innerhalb des Gehäuses (11) mit der Anschlusskastenanordnung verbunden ist, und eine Stromversorgung, die von außerhalb des Gehäuses (11) mit der Anschlusskastenanordnung verbunden ist, wobei die Anschlusskastenanordnung eine Anschlusskastenanordnung nach Anspruch 1 oder Anspruch 2 ist.

## Revendications

1. Assemblage d'un boîtier à bornes d'un compresseur du type étanchéifié, comprenant un boîtier d'étanchement (11) dans lequel une borne (32) pour connecter un fil conducteur (31) d'un moteur (M) et un câblage d'une alimentation et un boîtier à bornes (33) pour couvrir la borne (32) sont fixés, et qui stocke un mécanisme de compression de liquide (C) et le moteur (M) configuré pour entraîner le mécanisme de compression, **caractérisé en ce que** l'assemblage de boîtier à bornes du compresseur du type étanchéifié comprend un moyen de fixation pour fixer à la fois le boîtier à bornes (33) et, en cours d'utilisation, une borne de masse (37) dans le boîtier d'étanchement (11), le moyen de fixation comprenant un boulon (35) installé dans le boîtier d'étanchement (11), où le boîtier à bornes (33) présente une ouverture (33a) configurée pour permettre le passage d'un fil de masse (34) à travers celle-ci pour être connecté à la borne de masse (37), et où le moyen de fixation est configuré de façon que la borne de masse (37) soit fixée dans le boîtier à bornes (33) au boîtier d'étanchement (11).

2. Assemblage d'un boîtier à bornes d'un compresseur du type étanchéifié selon la revendication 1, où le moyen de fixation comprend le boulon (35) présentant une portion avec un filet de vis, un premier écrou (36) en prise avec le filet de vis du boulon (35), le premier écrou (36) et le boulon (35) étant configurés pour fixer le boîtier à bornes (33) au boîtier d'étanchement (11), et un deuxième boulon (38) en prise avec le filet de vis (40) du boulon (35), le deuxième écrou (38) étant positionné dans le boîtier à bornes (33) et étant configuré pour fixer, en cours d'utilisation, la borne de masse (37) dans le boîtier à bornes (33) au boîtier d'étanchement (11).

3. Compresseur du type étanchéifié comprenant un boîtier étanchéifié (11) contenant un mécanisme de compression de liquide (C), un moteur (M) pour entraîner ledit mécanisme (C) et un assemblage de boîtier à bornes monté à l'extérieu du boîtier (11), un fil conducteur (31) du moteur (M) étant connecté à l'assemblage de boîtier à bornes depuis l'intérieur du boîtier (11), et une alimentation en courant étant connectée à l'assemblage de boîtier à bornes depuis l'extérieur du boîtier (11), l'assemblage de boîtier à bornes étant tel que revendiqué dans la revendication 1 ou la revendication 2.
